# EUROPEAN PATENT APPLICATION

(11) **EP 4 740 803 A1**
(43) Date of publication of application: **13.05.2026**
(21) Application number: 23944189.2
(22) Date of filing: 06.11.2023
(51) Int. Cl.: A47J 36/38

(54) **COOKING APPARATUS AND CONTROL METHOD FOR COOKING APPARATUS**

(30) Priority: 03.07.2023 CN 202310808972
(71) Applicant: Guangdong Midea Kitchen Appliances Manufacturing Co., Ltd., Foshan, Guangdong 528311 (CN)
(72) Inventor: HUANG, Hua, Foshan, Guangdong 528311 (CN); SHOU, Jun, Foshan, Guangdong 528311 (CN); SHI, Xiaolu, Foshan, Guangdong 528311 (CN); ZHANG, Huiting, Foshan, Guangdong 528311 (CN); ZHANG, Zhi, Foshan, Guangdong 528311 (CN)
(74) Representative: RGTH
(86) International application number: PCT/CN2023/129998
(87) International publication number: WO 2025/007468

(57) **Abstract**

Provided are a cooking appliance (100) and a control method for the cooking appliance (100). The cooking appliance (100) includes: a cabinet (10), a cabinet door (20), and a dehumidification device (30). The cabinet (10) has an opening. The cabinet door (20) is disposed at the cabinet (10) in an openable and closable manner. The cabinet door (20) is configured to seal the opening when the cabinet door is closed. The dehumidification device (30) is configured to push the cabinet door (20) open in response to a door-opening control instruction.

## Description

### CROSS-REFERENCE TO RELATED APPLICATION

This application claims priority to and benefits of Chinese patent application No. 202310808972.2, filed with China National Intellectual Property Administration on July 3, 2023, the entire content of which incorporated herein by reference.

### FIELD

The present disclosure relates to the field of electrical appliance control technologies, and more particularly, to a cooking appliance and a control method for the cooking appliance.

### BACKGROUND

A moisture control function is almost a standard feature in many cooking appliances, such as a professional commercial steam oven. However, the moisture control function advertised by the cooking appliance with this capability is primarily mainly achieved by generating steam through a steam generator for humidification, while dehumidification is accomplished through corresponding exhaust vents. However, a small size of these exhaust vents results in limited dehumidification capacity and slow dehumidification speed, which fails to meet the requirements for chamber humidity in different cooking scenarios or for different food ingredients. Consequently, the cooking performance of the cooking appliance is unable to be guaranteed.

### SUMMARY

Embodiments of the present disclosure provide a cooking appliance and a control method for the cooking appliance.

The embodiments of the present disclosure provide a cooking appliance. The cooking appliance comprises: a cabinet, a cabinet door, and a dehumidification device. The cabinet has an opening. The cabinet door is disposed at the cabinet in an openable and closable manner. The cabinet door is configured to seal the opening when the cabinet door is closed. The dehumidification device is configured to push the cabinet door open in response to a door-opening control instruction.

In some embodiments, the cooking appliance further comprises a control device configured to generate the door-opening control instruction in response to an operation parameter of the cooking appliance.

In some embodiments, the operation parameter comprises at least one of a cooking duration, a cooking temperature, or a cooking humidity.

In some embodiments, the operation parameter comprises a cooking duration. The control device is further configured to generate the door-opening control instruction in response to the cooking duration reaching a predetermined duration. When the cooking duration reaches the predetermined duration, the cooking humidity inside the cabinet is greater than a predetermined humidity.

In some embodiments, the cooking appliance further comprises a temperature sensor configured to collect a cooking temperature inside the cabinet. The operation parameter comprises the cooking temperature. The control device is further configured to generate the door-opening control instruction in response to the cooking temperature reaching a predetermined temperature. When the cooking temperature reaches the predetermined temperature, the cooking humidity inside the cabinet is greater than a predetermined humidity.

In some embodiments, the cooking appliance further comprises a humidity sensor configured to collect the cooking humidity inside the cabinet. The operation parameter comprises the cooking humidity. The control device is further configured to generate the door-opening control instruction in response to the cooking humidity reaching a predetermined humidity.

In some embodiments, the cooking appliance further comprises a heating device. The control device is further configured to control the heating device to perform preheating. The dehumidification device is configured not to respond to the door-opening control instruction within a predetermined duration subsequent to start of the preheating.

In some embodiments, the dehumidification device comprises a motor and a push rod. The motor is configured to drive, in response to the door-opening control instruction, the push rod to move to push the cabinet door open.

In some embodiments, the cabinet door is connected to the cabinet via a hinge structure. The motor is configured to drive, in response to the door-opening control instruction, the push rod to move in a direction toward the cabinet door, to push the cabinet door open. The operation parameter comprises a dehumidification duration. The control device is further configured to generate, in response to the dehumidification duration being greater than a predetermined dehumidification duration, a door-closing control instruction. The motor is further configured to drive, in response to the door-closing control instruction, the push rod to move in a direction away from the cabinet door. The cabinet door is closed under drive of the hinge structure.

In some embodiments, the push rod is connected to the cabinet door. The motor is further configured to drive, in response to the door-opening control instruction, the push rod to move, to push the cabinet door open by driving the cabinet door to move in a direction away from the opening. The operation parameter comprises a dehumidification duration. The control device is further configured to generate, in response to the dehumidification duration being greater than a predetermined dehumidification duration, a door-closing control instruction. The motor is further configured to drive, in response to the door-closing control instruction, the push rod to move, to close the cabinet door by driving the cabinet door to move in a direction toward the opening.

In some embodiments, the cooking appliance further comprises a heating device. The operation parameter comprises a cooking temperature. The control device is further configured to control a heating parameter of the heating device based on the cooking temperature, to maintain the cooking temperature within a predetermined temperature range.

The embodiments of the present disclosure provide a control method applied to a cooking appliance. The cooking appliance comprises: a cabinet, a cabinet door, and a dehumidification device. The control method comprises: obtaining an operation parameter of the cooking appliance; and generating, in response to the operation parameter reaching a predetermined parameter threshold, a door-opening control instruction. The dehumidification device is configured to push the cabinet door open in response to the door-opening control instruction.

In the cooking appliance and the control method for the cooking appliance of the present disclosure, the cooking appliance is provided with the dehumidification device. During a cooking process, when dehumidification is required (for example, when the cooking humidity inside the cabinet is relatively high), the cooking appliance generates the door-opening control instruction. Upon receiving the door-opening control instruction, the dehumidification device pushes the cabinet door open, allowing a large amount of steam inside the cabinet to escape quickly through a gap between the cabinet door and the cabinet. This reduces the cooking humidity inside the cabinet, ensures that the cooking humidity inside the cabinet is maintained within a reasonable range, and thereby guarantees cooking performance of the cooking appliance.

Additional aspects and advantages of the present disclosure will be provided at least in part in the following description, or will become apparent at least in part from the following description, or can be learned from practicing of the present disclosure.

### BRIEF DESCRIPTION OF the DRAWINGS

The above and/or additional aspects and advantages of the present disclosure will become more apparent and more understandable from the following description of embodiments taken in conjunction with the accompanying drawings.
FIG. 1 is a schematic structural diagram of a cooking appliance according to some embodiments.
FIG. 2 is a schematic diagram showing an application scenario of a cooking appliance according to some embodiments.
FIG. 3 is a schematic diagram showing an application scenario of a cooking appliance according to some embodiments.
FIG. 4 is a schematic flowchart of a control method for a cooking appliance according to some embodiments.

### DETAILED DESCRIPTION OF THE EMBODIMENTS

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the embodiments of the present disclosure.

In the present disclosure, unless expressly stipulated and defined otherwise, the first feature "on" or "under" the second feature may mean that the first feature is in direct contact with the second feature, or the first and second features are in indirect contact through an intermediate. Moreover, the first feature "above" the second feature may mean that the first feature is directly above or obliquely above the second feature, or simply mean that the level of the first feature is higher than that of the second feature. The first feature "below" the second feature means that the first feature is directly below or obliquely below the second feature, or simply means that the level of the first feature is smaller than that of the second feature.

In addition, the terms "first" and "second" are only used for descriptive purposes, and cannot be understood as indicating or implying relative importance or implicitly indicating the number of indicated technical features. Therefore, the features associated with "first" and "second" may explicitly or implicitly comprise at least one of the features. In the description of the present disclosure, "plurality" means at least two, unless otherwise specifically defined.

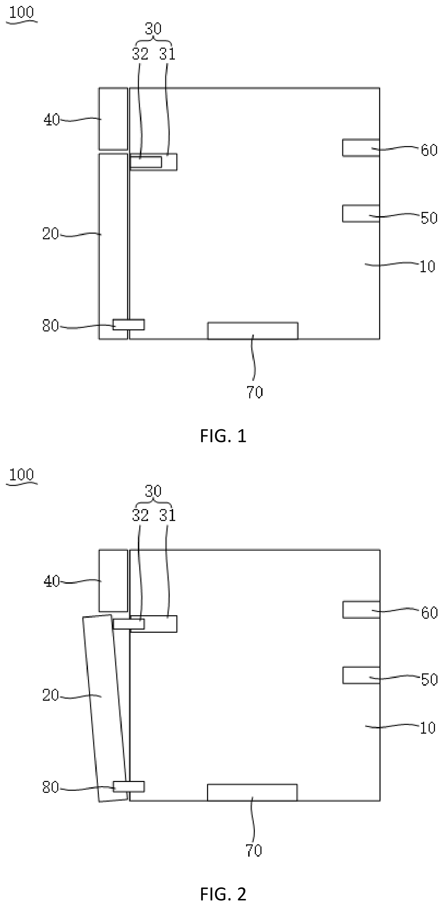

As illustrated in FIG. 1 and FIG. 2, embodiments of the present disclosure provide a cooking appliance 100. The cooking appliance 100 comprises: a cabinet 10, a cabinet door 20, and a dehumidification device 30. The cabinet 10 comprises an opening. The cabinet door 20 is disposed at the cabinet 10 in an openable and closable manner. The cabinet door 20 is configured to seal the opening when the cabinet door is closed. The dehumidification device 30 is configured to push the cabinet door 20 open in response to a door-opening control instruction.

Specifically, during a baking process of food ingredients, in addition to a temperature inside the cabinet 10, humidity inside the cabinet 10 is also a crucial factor determining cooking performance. Different food ingredients have different cooking humidity requirements. For example, when roasting meat, appropriate humidification can be applied, to retain juice inside the meat while preventing it from being burnt. In contrast, for baking of cookies such as yogurt melts, continuous dehumidification is required to avoid cookies becoming soggy and not crispy, which affects their texture. For food that needs to form a hollow structure such as Mochi and puffs, appropriate dehumidification is also required during the baking process, to prevent insufficient drying of moisture inside the food, which causes an overall structure to collapse and shrink subsequent to being taken out of the appliance, failing to achieve a hollow structure.

With the increasing popularity of the cooking appliance 100, such as a steam oven, user's experience requirements for various functions, such as baking and air frying, are also rising. In addition, the user trends to use the cooking appliance 100 for more professional cooking, which further increases user's potential requirements for a moisture control capability of the cooking appliance 100.

A cabinet of a traditional cooking appliance has strong airtightness, and usually only exhaust vents are disposed at the cabinet for ventilation. When a volume of steam inside the cabinet gradually increases and pressure inside the cabinet gradually rises, the steam escapes to the outside of the cabinet through these exhaust vents. However, to maintain airtightness of the cabinet, the size of the exhaust vent is usually set to be small, resulting in slow dehumidification rate and unsatisfactory dehumidification effect. Consequently, during a cooking process of the traditional cooking appliance, moisture generated by the food ingredients cannot be discharged timely, which leads to excessive high humidity inside the cabinet, resulting in problems such as poor baking performance and failure to achieve crispy textures when air frying in the traditional cooking appliance. In this way, the cooking performance of the traditional cooking appliance is impacted and use experience of the user is influenced. In addition, the method of relying solely on the exhaust vent for ventilation cannot provide targeted dehumidification based on different cooking requirements of various food ingredients, failing to meet the humidity requirements of different cooking scenarios or food ingredients.

To address the above issues, in addition to disposing the exhaust vents at the cabinet 10, the present disclosure further comprises the dehumidification device 30 that may come into contact with the cabinet door 20. After the cooking appliance 100 begins cooking, the temperature inside the cabinet 10 continuously rises, and the steam is continuously generated, causing the cooking humidity inside the cabinet 10 to continuously increase. When the cooking humidity inside the cabinet 10 is high, which is unfavorable for cooking of the food ingredients inside the cabinet 10, the cooking appliance 100 can generate the door-opening control instruction. In the presence of the dehumidification device 30, the dehumidification device 30 pushes the cabinet door 20 open at a certain angle. In this case, a gap is formed between the cabinet door 20 and the cabinet 10. The steam inside the cabinet 10 can quickly escape from the cabinet 10 to the outside of the cabinet through this gap, which allows the cooking humidity inside the cabinet 10 to decrease rapidly. This prevents a large amount of steam from remaining inside the cabinet 10 and adversely affecting the cooking of the cooking appliance 100. For example, as illustrated in FIG. 1 and FIG. 2, the cooking appliance 100 in FIG. 1 cooks the food ingredients when the cabinet door is closed, while the cooking appliance 100 in FIG. 2 is performing dehumidification. Furthermore, the dehumidification device 30 can also, based on the different cooking requirements of various food ingredients, push the cabinet door 20 open only when the cooking food requires dehumidification, meeting the humidity requirements of different cooking scenarios or food ingredients.

The cooking appliance 100 of the present disclosure is provided with the dehumidification device 30. During the cooking process, when dehumidification is required (for example, when the cooking humidity inside the cabinet 10 is relatively high), the cooking appliance 100 can generate the door-opening control instruction. Upon receiving the door-opening control instruction, the dehumidification device 30 pushes the cabinet door 20 open, allowing a large amount of steam inside the cabinet 10 to escape quickly through the gap between the cabinet door 20 and the cabinet 10. This reduces the cooking humidity inside the cabinet 10, ensures that the cooking humidity inside the cabinet 10 is maintained within a reasonable range, and guarantees the cooking performance of the cooking appliance 100.

As illustrated in FIG. 2, in some embodiments, the cooking appliance 100 comprises a control device 40 configured to generate a door-opening control instruction in response to an operation parameter of the cooking appliance 100.

Specifically, the cooking appliance 100 cooks the food ingredients based on an automatic menu cooking program. This automatic menu cooking program is an optimal cooking program formulated for a menu with a specific recipe and a fixed portion size, and a predetermined parameter threshold is set in advance for the operation parameter during dehumidification as desired. The program can be pre-stored in a memory of the control device 40 or stored in a cloud. The program comprises information such as a function mode used in each stage of the menu cooking process, a predetermined temperature range, duration, whether to open the door for dehumidification, and a predetermined parameter threshold. The predetermined temperature range is a target temperature range for cooking the corresponding food ingredients, and cooking the food ingredients within the predetermined temperature range can achieve better cooking performance. When the user selects a certain automatic menu and starts cooking, the control device 40 performs humidity control and temperature control based on the information contained in the program corresponding to this menu to complete the cooking process.

The operation parameter may comprise at least one of a cooking duration, a cooking temperature, and a cooking humidity. After the cooking begins, the control device 40 can obtain the predetermined parameter threshold and acquire the operation parameter of the cooking appliance 100 in real time. When the operation parameter reaches the predetermined parameter threshold, the control device 40 can confirm that dehumidification is required in this case and generate the door-opening control instruction to control the dehumidification device 30 to push the cabinet door 20 open, allowing the steam inside the cabinet 10 to be effectively discharged. This helps achieve an ideal cooking humidity environment inside the cabinet 10, facilitating the cooking appliance 100 to realize better cooking performance.

As illustrated in FIG. 2, in some embodiments, the operation parameter comprises a cooking duration. The control device 40 is further configured to generate the door-opening control instruction in response to the cooking duration reaching a predetermined duration. When the cooking duration reaches the predetermined duration, the cooking humidity inside the cabinet 10 is greater than the predetermined humidity.

Specifically, different cooking scenarios or different food ingredients require different humidity levels. For cooking food ingredients of the same type, performing dehumidification when a certain duration is reached can yield better cooking performance. The humidity corresponding to this duration is the predetermined humidity at which dehumidification is required. Therefore, the predetermined duration at which various food ingredients require door opening for dehumidification can be summarized through prior experiments, and the humidity corresponding to this predetermined duration can be set as the predetermined humidity. The predetermined duration and the predetermined humidity can be stored in the memory of the control device 40 or in the cloud. When the user selects a certain type of food ingredient for cooking, the control device 40 can obtain the predetermined duration corresponding to that food ingredient. When the cooking appliance 100 starts cooking the food ingredients, the control device 40 starts timing. When the cooking duration reaches the predetermined duration, it can be confirmed that the cooking humidity in the cabinet 10 is greater than the predetermined humidity. In this case, the control device 40 generates the door-opening control instruction to control the dehumidification device 30 to push the cabinet door 20 open, allowing the dehumidification to be performed timely, and thereby guaranteeing the cooking performance of the cooking appliance 100.

Furthermore, the cooking appliance 100 may further comprise a humidity sensor 50 that can directly collect the cooking humidity inside the cabinet 10. Therefore, the operation parameter may also comprise the cooking duration and the cooking humidity, with the corresponding predetermined duration and predetermined humidity. When the cooking appliance 100 starts cooking, the control device 40 can start timing. When the cooking duration reaches the predetermined duration, the control device 40 can control the humidity sensor 50 to collect the cooking humidity inside the cabinet 10 to reconfirm whether it is an appropriate time moment to open the door. When the cooking humidity reaches the predetermined humidity at that moment, the cooking appliance 100 can generate the door-opening control instruction to ensure that the dehumidification device 30 pushes the cabinet door 20 open at a correct time moment, guaranteeing effective control of the cooking humidity inside the cabinet 10. In this case, various operating modes of the humidity sensor 50 are provided. In an embodiment, the humidity sensor 50 collects the cooking humidity inside the cabinet 10 in real time. In this way, when a situation arises where the cooking humidity inside the cabinet 10 reaches the predetermined humidity before the cooking duration elapses due to operational errors or excessively high moisture content in the food ingredients, the control device 40 can timely detect that the cooking humidity has reached the predetermined humidity and generate the door-opening control instruction. This further ensures that the cooking humidity inside the cabinet 10 is controlled within a certain appropriate range. In another embodiment, the humidity sensor 50 can collect the cooking humidity inside the cabinet 10 after the cooking duration reaches the predetermined duration, to reduce an operating duration and energy consumption of the humidity sensor 50.

As illustrated in FIG. 2, in some embodiments, the cooking appliance 100 further comprises a temperature sensor 60 configured to collect a cooking temperature inside the cabinet 10. The operation parameter comprises the cooking temperature. The control device 40 is further configured to generate the door-opening control instruction in response to the cooking temperature reaching a predetermined temperature. When the cooking temperature reaches the predetermined temperature, the cooking humidity inside the cabinet 10 is greater than the predetermined humidity.

Specifically, for the food ingredients of the same type, performing dehumidification when a certain temperature is reached can yield better cooking performance. Therefore, the predetermined temperature at which various food ingredients require door opening for dehumidification can be summarized through experiments, and the humidity corresponding to this predetermined temperature can be set as the predetermined humidity. The predetermined duration and the predetermined humidity can be stored in the memory of the control device 40 or in the cloud. When the user selects a certain type of food ingredient and the corresponding cooking function, a desired cooking temperature and duration can be selected. After the cooking begins, the cooking appliance 100 cooks based on the corresponding cooking function, cooking temperature, and duration. During the cooking process, the temperature sensor 60 obtains the cooking temperature inside the cabinet 10 in real time. In response to the cooking temperature reaching the predetermined temperature, the cooking humidity inside the cabinet 10 is determined to be greater than the predetermined humidity. In this case, the control device 40 generates the door-opening control instruction to control the dehumidification device 30 to push the cabinet door 20 open, allowing the steam inside the cabinet 10 to be effectively discharged. This achieves the ideal cooking humidity environment, and thereby achieves the better cooking performance.

Furthermore, the operation parameter may also comprise the cooking temperature and the cooking humidity, with the corresponding predetermined temperature and predetermined humidity. After the cooking appliance 100 starts cooking, the temperature sensor 60 obtains the cooking temperature in real time. When the cooking temperature reaches the predetermined temperature, the control device 40 can control the humidity sensor 50 to collect the cooking humidity inside the cabinet 10 to reconfirm whether it is the appropriate time moment to open the door. When the cooking humidity reaches the predetermined humidity at that moment, the cooking appliance 100 can generate the door-opening control instruction to ensure that the dehumidification device 30 pushes the cabinet door 20 open at the correct time moment, guaranteeing the cooking performance of the cooking appliance 100.

As illustrated in FIG. 2, in some embodiments, the cooking appliance 100 further comprises a humidity sensor 50 configured to collect the cooking humidity inside the cabinet 10. The operation parameter comprises the cooking humidity. The control device 40 is further configured to generate the door-opening control instruction in response to the cooking humidity reaching the predetermined humidity.

Specifically, when the cooking appliance 100 further comprises the humidity sensor 50, the cooking appliance 100 can also directly obtain the cooking humidity inside the cabinet 10 in real time through the humidity sensor 50. When the cooking humidity reaches the predetermined humidity, the control device 40 can obtain this information timely and generate the door-opening control instruction. This provides direct obtaining of the cooking humidity inside the cabinet 10, facilitating controlling the cooking humidity inside the cabinet 10 within a reasonable range.

As illustrated in FIG. 2, in some embodiments, the cooking appliance 100 further comprises a heating device 70. The control device 40 is further configured to control the heating device 70 to perform preheating. The dehumidification device 30 does not respond to the door-opening control instruction within a predetermined duration subsequent to start of the preheating.

Specifically, the cooking appliance 100 further comprises the heating device 70 configured to heat the food to complete cooking. To improve a cooking efficiency, the control device 40 can control the heating device 70 to perform preheating prior to placing the food in the cabinet 10, to reduce the heating duration subsequent to placing the food in the cabinet 10.

During the preheating process, the cooking temperature may reach the predetermined temperature. However, since cooking of the food ingredients has not yet started at this stage, the cooking humidity inside the cabinet 10 is lower than the predetermined humidity. Therefore, the dehumidification is not required at this stage. Subsequent to preheating being completed, the food ingredients are placed in the cabinet 10 for cooking. At this point, the heating device 70 heats the food ingredients at low power, and then gradually increases the power. During this process, the cooking temperature in the cabinet 10 will drop initially and then gradually increase to the predetermined temperature range. When a preheating temperature is higher than the predetermined temperature, the cooking temperature may likely reach the predetermined temperature during a temperature drop process. However, since the food ingredients have just started to be heated in this case, less steam is generated, and the cooking humidity inside the cabinet 10 generally does not reach the predetermined humidity. Therefore, dehumidification is also not required.

For example, for a certain food ingredient, the predetermined temperature range is 170°C to 180°C, the preheating temperature is 150°C, and the predetermined temperature is 120°C. Obviously, during the preheating process, the cooking temperature will reach the predetermined temperature. Subsequent to the preheating being completed and formal cooking starting, the cooking temperature may drop below the predetermined temperature within the predetermined duration, such as, within 5 minutes. For example, when the cooking temperature at a certain time moment is 100°C, it obvious that the cooking temperature still reaches the predetermined temperature during the temperature drop process. However, whether during the preheating process or the temperature drop process, the cooking humidity inside the cabinet 10 is usually lower than the predetermined humidity. Therefore, there is no need to perform dehumidification in these two stages.

In summary, within the predetermined duration subsequent to start of the heating, such as 10 minutes, the operation parameter may reach the predetermined parameter threshold. However, at this time, the cooking humidity inside the cabinet 10 is usually lower than the predetermined humidity, and the dehumidification is not required. Therefore, the dehumidification device 30 does not respond to the door-opening control instruction, or the control device 40 does not generate the door-opening control instruction at all, to reduce unnecessary operation and energy consumption of the dehumidification device 30 or the control device 40.

As illustrated in FIG. 2, in some embodiments, the dehumidification device 30 comprises a motor 31 and a push rod 32. The motor 31 is configured to drive, in response to the door-opening control instruction, the push rod 32 to move to push the cabinet door 20 open.

Specifically, the dehumidification device 30 may comprise the motor 31 and the push rod 32, and the push rod 32 can come into contact with the cabinet door 20 after moving. When receiving the door-opening control instruction, the motor 31 drives the push rod 32 to move. During the movement of the push rod 32, part of a structure of the push rod 32 comes into contact with the cabinet door 20 and continues to move in a direction away from the opening, to drive the cabinet door 20 to move a certain distance, such as 10 mm, in the direction away from the opening. In this way, the gap is formed between the cabinet door 20 and the cabinet 10. The steam inside the cabinet 10 can escape quickly through the gap, leading to a rapid drop in the cooking humidity inside the cabinet 10.

Furthermore, the movement distance of the cabinet door 20 can be set according the corresponding food ingredients. For example, when more moisture is required during the cooking process of the food ingredients, the movement distance of the cabinet door 20 can be set to a smaller value. When a drier environment is required during the cooking process of the food ingredients, the movement distance can be set to a larger value. The movement distance of the corresponding food ingredients can be stored in a memory of the dehumidification device 30 or in the cloud. After the user selects the food ingredients, the dehumidification device 30 can push the cabinet door 20 according to the movement distance corresponding to the selected food ingredients, thereby meeting the cooking humidity requirements of different food ingredients and different cooking scenarios.

Of course, the dehumidification device 30 may further comprise other structures. In other embodiments, the dehumidification device 30 comprises the push rod 32 and a wax motor that is a device that converts thermal energy into mechanical energy by utilizing volume expansion generated by a phase change of temperature-sensitive wax from a solid state to a liquid state. When converting the thermal energy into the mechanical energy, the wax motor can push the push rod 32 to move, to push the cabinet door 20 open. In yet other embodiments, the dehumidification device 30 comprises a rotating shaft and the motor 31. The cabinet door 20 is connected to the cabinet 10 via the rotating shaft.

In this way, the dehumidification device 30 can, through its corresponding structures, such as the motor 31 and push rod 32, come into contact with the cabinet door 20 and push it open when receiving the door-opening control instruction, completing the dehumidification through the gap between the cabinet door 20 and the cabinet 10. Therefore, steam inside the cabinet 10 is effectively discharged, to achieve the ideal cooking humidity environment inside the cabinet 10, thereby facilitating the cooking appliance 100 to realize better cooking performance.

As illustrated in FIG. 2, in some embodiments, the cabinet door 20 is connected to the cabinet 10 via a hinge structure 80. The motor 31 is configured to drive, in response to the door-opening control instruction, the push rod 32 to move in a direction toward the cabinet door 20, to push the cabinet door 20 open. The operation parameter comprises a dehumidification duration. The control device 40 is further configured to generate a door-closing control instruction in response to the dehumidification duration being greater than a predetermined dehumidification duration. The motor 31 is further configured to drive, in response to the door-closing control instruction, the push rod 32 to move in a direction away from the cabinet door 20. The cabinet door 20 is closed under drive of the hinge structure 80.

Specifically, during a dehumidification process, the dehumidification duration is crucial for the dehumidification effect. It should be understood that, a longer dehumidification duration results in greater volume of steam discharged and correspondingly better dehumidification effect. Different food ingredients may require different dehumidification durations under different cooking scenarios. For example, food ingredients that require a more humid cooking environment correspond to a shorter dehumidification duration, while food ingredients that require a drier cooking environment correspond to a longer dehumidification duration. Therefore, the operation parameter further comprises the dehumidification duration, and the predetermined parameter threshold further comprises the predetermined dehumidification duration. The control device 40 controls an opening duration of the cabinet door 20 based on the predetermined dehumidification duration. The predetermined dehumidification durations corresponding to different food ingredients under different cooking scenarios are also stored in the memory of the control device 40 or in the cloud.

The hinge structure 80 is a mechanical device configured to connect two solid components and allow relative rotation between them. When receiving the door-opening control instruction, the motor 31 drives the push rod 32 to move. Under the push of the push rod 32 and the constraint of the hinge structure 80, the cabinet door 20 is pushed open and rotates relative to the cabinet 10 until the push rod 32 stops moving. After the cabinet door 20 is pushed open, the dehumidification device 30 starts timing and controls a duration for which the dehumidification device 30 pushes the cabinet door 20 open based on the predetermined dehumidification duration. In response to the dehumidification duration being greater than the predetermined dehumidification duration, it can be determined that the ideal cooking humidity environment has been achieved inside the cabinet 10. At this time, the control device 40 can generate the door-closing control instruction. When receiving the door-closing control instruction, the motor 31 drives push rod 32 to move in the direction away from the cabinet door 20 until the entire push rod 32 is fully retracted into the cabinet 10. During the movement of the push rod 32 in the direction away from the cabinet door 20, force exerted on the cabinet door 20 by the push rod 32 gradually decreases until it reaches zero. In this case, the hinge structure 80 can drive the cabinet door 20 to move in the direction toward the opening, to close the cabinet door 20 and reseal the opening, thereby completing an entire dehumidification process. In this way, the cooking appliance 100 can achieve opening and closing of the cabinet door 20 through the dehumidification device 30 and the hinge structure 80, to regulate the cooking humidity inside the cabinet 10. This ensures that the ideal cooking humidity environment is achieved inside the cabinet 10, thereby guaranteeing the cooking performance of the cooking appliance 100.

For example, taking baking mochi as an example. When a traditional cooking appliance bakes mochi, the control device controls the heating device to perform preheating. When it is detected that the cooking temperature inside the cabinet reaches the preheating temperature, the user is prompted to place the mochi inside the cabinet.

The traditional cooking appliance heats the mochi at 170°C for 10 minutes. Subsequent to 10 minutes of heating, the control device activates a fan inside the cabinet to circulate hot air inside the cabinet, making the temperature uniform at every corner of the cabinet. Therefore, the mochi is ensured to be heated uniformly. Simultaneously, the control device continues to control the heating device to heat the mochi at 170°C. Subsequent to heating for 25 minutes in this way, cooking of the mochi can be completed. During the heating process, it can be observed that a large amount of steam is generated inside the cabinet, and only a small portion of the steam escapes from the cabinet through the exhaust vents.

However, when the cooking appliance 100 of the present disclosure bakes mochi, a predetermined duration of 10 minutes and a dehumidification duration of 20 minutes are set. Similarly, the cooking appliance 100 of the present disclosure first controls the heating device 70 to perform preheating. When it is detected that the cooking temperature of the cabinet 10 reaches the preheating temperature, the user is promoted to place the mochi inside the cabinet 10. The cooking appliance 100 heats the mochi at 170°C for 10 minutes. Subsequent to 10 minutes of heating, the predetermined duration is reached. At this time, the push rod 32 pushes the cabinet door 20 open. Simultaneously, the fan is activated, which allows the hot air inside the cabinet 10 to circulate, promoting discharge of the steam inside the cabinet 10 exhaust while ensuring a uniform temperature inside the cabinet 10. Concurrently, the control device 40 starts timing to record the dehumidification duration. During the dehumidification process, operating parameters of the fan and the heating device 70 remain unchanged. Subsequent to 20 minutes of dehumidification, the dehumidification duration reaches the predetermined dehumidification duration. In this case, the push rod 32 moves in the direction away from the cabinet door 20, and the cabinet door 20 is closed under the drive of the hinge structure 80. The fan and the heating device 70 continue to operate for another 5 minutes prior to stopping, at which point the cooking of mochi is completed. Throughout the entire heating process, it can be observed that after heating the mochi, the volume of steam inside the cabinet 10 continuously increases. However, after the push rod 32 pushes the cabinet door 20 open, a large amount of steam inside the cabinet 10 quickly escapes through the gap between the cabinet door 20 and the cabinet 10, significantly reducing the cooking humidity inside the cabinet 10.

Through the inspection of the mochi cooked by two types of cooking appliances 100, it can be found that the mochi cooked by the traditional cooking appliance collapses and shrinks severely, with an average height of 34 mm. In contrast, the mochi cooked by the cooking appliance 100 of the present disclosure has a full shape, with an average height of 47 mm. Obviously, compared with the traditional cooking appliance, the cooking performance of the cooking appliance 100 of the present disclosure is improved by 38%.

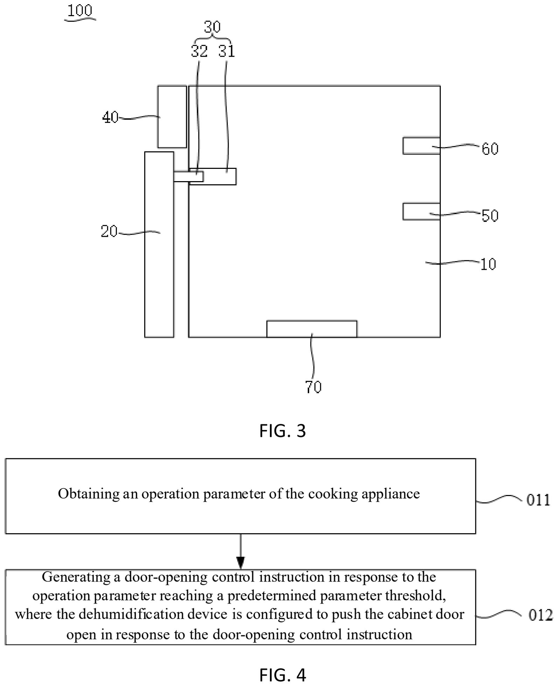

As illustrated in FIG. 3, in some embodiments, the push rod 32 is connected to the cabinet door 20. The motor 31 is further configured to drive, in response to the door-opening control instruction, the push rod 32 to move to push the cabinet door 20 open by driving the cabinet door 20 to move in a direction away from the opening. The operation parameter comprises a dehumidification duration. The control device 40 is further configured to generate, in response to the dehumidification duration being greater than a predetermined dehumidification duration, a door-closing control instruction. The motor 31 is further configured to drive, in response to the door-closing control instruction, the push rod 32 to move, to close the cabinet door 20 by driving the cabinet door 20 to move in a direction toward the opening.

Specifically, the push rod 32 can also be directly connected to the cabinet door 20. When receiving the door-opening control instruction, the motor 31 drives the push rod 32 to move. The moving push rod 32 can drive the cabinet door 20 to move in the direction away from the opening, to push the cabinet door 20 open and create the gap between the cabinet door 20 and the cabinet 10. When receiving the door-closing control instruction, the motor 31 drives the push rod 32 to move, and the moving push rod 32 drives the cabinet door 20 to move in the direction toward the opening, to close the cabinet door 20 and reseal the opening. In this way, the opening and closing of the cabinet door 20 can be accomplished using the push rod 32 and motor 31. This allows the cooking appliance 100 to smoothly complete the dehumidification process and timely close the cabinet door 20 after the dehumidification is completed. In this way, the cooking humidity inside the cabinet 10 is regulated, which ensures that the ideal cooking humidity environment is achieved inside the cabinet 10, guaranteeing the cooking performance of the cooking appliance 100.

As illustrated in FIG. 2, in some embodiments, the operation parameter comprises a cooking temperature. The control device 40 is further configured to control a heating parameter of the heating device 70 based on the cooking temperature, to maintain the cooking temperature within a predetermined temperature range.

Specifically, each food ingredient has a corresponding predetermined temperature range when cooked. Subsequent to the user selecting the corresponding food ingredient and cooking function, the control device 40 will obtain the corresponding predetermined temperature range and control the heating device 70 to heat the food ingredient. During the heating process, the control device 40 also obtains a real-time cooking temperature of the cabinet 10 by the temperature sensor 60, and adjusts the heating parameter of the heating device 70, such as heating power and the heating duration, based on the cooking temperature and the predetermined temperature range, to gradually raise the cooking temperature to the predetermined temperature range and maintain it within the predetermined temperature range. In this way, the control device 40 can adjust the heating parameter of the heating device 70 by utilizing the real-time cooking temperature and predetermined temperature range of the cabinet 10, to achieve the temperature rise and temperature control. This ensures that the cooking temperature can reach and maintain within the predetermined temperature range, thereby guaranteeing the cooking performance of the cooking appliance 100.

As illustrated in FIG. 1 and FIG. 4, the present disclosure provides a control method for a cooking appliance 100. The cooking appliance 100 comprises a cabinet 10, a cabinet door 20, and a dehumidification device 30. The control method comprises operations at blocks.

At block 011, an operation parameter of the cooking appliance 100 is obtained.

At block 012, in response to the operation parameter reaching a predetermined parameter threshold, a door-opening control instruction is generated. The dehumidification device 30 is configured to push, in response to the door-opening control instruction, the cabinet door 20 open.

Specifically, subsequent to the user selecting the food ingredients to be cooked and the cooking function, the control device 40 starts to control the heating device 70 to heat the food ingredients, and obtains the predetermined parameter threshold, such as a predetermined temperature, predetermined humidity, and predetermined duration, from a memory of the control device 40. During the heating process, the control device 40 obtains the operation parameter of the cooking appliance 100 in real time, and generates, in response to the operation parameter reaching the predetermined parameter threshold, the door-opening control instruction. The operation parameter comprises at least one of the cooking duration, the cooking temperature, or the cooking humidity. In response receiving the door-opening control instruction, the dehumidification device 30 pushes the cabinet door 20 open, which allows a large amount of steam generated inside the cabinet 10 to escape rapidly through the gap between the cabinet 10 and the cabinet door 20. Therefore, the steam is effectively discharged from the cabinet 10, to achieve an ideal cooking humidity environment, facilitating the cooking appliance 100 in achieving better cooking performance.

With the control method of the present disclosure, the dehumidification device 30 is disposed in the cooking appliance 100. During the cooking process, when dehumidification is required (e.g., when the cooking humidity inside the cabinet 10 is high), the cooking appliance 100 can generate the door-opening control instruction.

When receiving the door-opening control instruction, the dehumidification device 30 pushes the cabinet door 20 open, allowing a large amount of steam inside the cabinet 10 to escape quickly through the gap between the cabinet door 20 and the cabinet 10. This reduces the cooking humidity inside the cabinet 10, ensures the cooking humidity inside the cabinet 10 is maintained within a reasonable range, and guarantees the cooking performance of the cooking appliance 100.

In the description of this specification, descriptions with reference to the terms "an embodiment", "some embodiments", "illustrative embodiments", "examples", "specific examples" "some examples" etc., mean that specific features, structure, materials or characteristics described in conjunction with the embodiment or example are comprised in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner. In addition, different embodiments or examples and features of different embodiments or examples described in the specification may be combined by those skilled in the art without mutual contradiction. Any process or method described in a flowchart or described herein in other ways may be understood to comprise one or more modules, segments, or portions of codes of executable instructions for achieving specific logical functions or steps in the process. The scope of a preferred embodiment of the present disclosure comprises other implementations. A function may be performed not in a sequence shown or discussed, comprising a substantially simultaneous manner or a reverse sequence based on the function involved, which should be understood by those skilled in the art to which the embodiments of the present disclosure belong.

Although embodiments of the present disclosure have been illustrated and described above, it should be understood that the above embodiments are merely exemplary, and cannot be construed to limit the present disclosure. For those skilled in the art, changes, alternatives, and modifications can be made to the embodiments without departing from the scope of the present disclosure.

## Claims

1. A cooking appliance, comprising:
a cabinet having an opening;
a cabinet door disposed at the cabinet in an openable and closable manner, wherein the cabinet door is configured to seal the opening when the cabinet door is closed; and
a dehumidification device configured to push the cabinet door open in response to a door-opening control instruction.

2. The cooking appliance according to claim 1, further comprising:
a control device configured to generate the door-opening control instruction in response to an operation parameter of the cooking appliance.

3. The cooking appliance according to claim 2, wherein the operation parameter comprises at least one of a cooking duration, a cooking temperature, or a cooking humidity.

4. The cooking appliance according to claim 2, wherein the operation parameter comprises a cooking duration, the control device being further configured to generate the door-opening control instruction in response to the cooking duration reaching a predetermined duration, wherein when the cooking duration reaches the predetermined duration, a cooking humidity inside the cabinet is greater than a predetermined humidity.

5. The cooking appliance according to claim 2, further comprising a temperature sensor configured to collect a cooking temperature inside the cabinet, wherein the operation parameter comprises the cooking temperature, the control device being further configured to generate the door-opening control instruction in response to the cooking temperature reaching a predetermined temperature, wherein when the cooking temperature reaches the predetermined temperature, a cooking humidity inside the cabinet is greater than a predetermined humidity.

6. The cooking appliance according to claim 2, further comprising a humidity sensor configured to collect a cooking humidity inside the cabinet, wherein the operation parameter comprises the cooking humidity, the control device being further configured to generate the door-opening control instruction in response to the cooking humidity reaching a predetermined humidity.

7. The cooking appliance according to claim 2, further comprising a heating device, wherein the control device is further configured to control the heating device to perform preheating, and wherein the dehumidification device is configured not to respond to the door-opening control instruction within a predetermined duration subsequent to start of the preheating.

8. The cooking appliance according to claim 2, wherein the dehumidification device comprises a motor and a push rod, the motor being configured to drive, in response to the door-opening control instruction, the push rod to move to push the cabinet door open.

9. The cooking appliance according to claim 8, wherein:
the cabinet door is connected to the cabinet via a hinge structure, the motor being configured to drive, in response to the door-opening control instruction, the push rod to move in a direction toward the cabinet door, in order to push the cabinet door open; and
the operation parameter comprises a dehumidification duration, wherein the control device is further configured to generate, in response to the dehumidification duration being greater than a predetermined dehumidification duration, a door-closing control instruction, and wherein the motor is further configured to drive, in response to the door-closing control instruction, the push rod to move in a direction away from the cabinet door, wherein the cabinet door is closed under drive of the hinge structure.

10. The cooking appliance according to claim 8, wherein:
the push rod is connected to the cabinet door, the motor being further configured to drive, in response to the door-opening control instruction, the push rod to move, in order to push the cabinet door open by driving the cabinet door to move in a direction away from the opening; and
the operation parameter comprises a dehumidification duration, wherein the control device is further configured to generate, in response to the dehumidification duration being greater than a predetermined dehumidification duration, a door-closing control instruction, and wherein the motor is further configured to drive, in response to the door-closing control instruction, the push rod to move, in order to close the cabinet door by driving the cabinet door to move in a direction toward the opening.

11. The cooking appliance according to claim 2, further comprising a heating device, wherein the operation parameter comprises a cooking temperature, the control device being further configured to control a heating parameter of the heating device based on the cooking temperature, to maintain the cooking temperature within a predetermined temperature range.

12. A control method for a cooking appliance, wherein the cooking appliance comprises a cabinet, a cabinet door, and a dehumidification device, and the control method comprises:
obtaining an operation parameter of the cooking appliance; and
generating, in response to the operation parameter reaching a predetermined parameter threshold, a door-opening control instruction, wherein the dehumidification device is configured to push the cabinet door open in response to the door-opening control instruction.
